(19) Europäisches Patentamt
European Patent Office
Office européen des brevets

(11) Veröffentlichungsnummer: **0 284 726 B1**

# (12) EUROPÄISCHE PATENTSCHRIFT

(45) Veröffentlichungstag der Patentschrift: **23.10.91**

(51) Int. Cl.[5]: **C08G 63/60**, C09K 19/38

(21) Anmeldenummer: **88101429.4**

(22) Anmeldetag: **02.02.88**

Die Akte enthält technische Angaben, die nach dem Eingang der Anmeldung eingereicht wurden und die nicht in dieser Patentschrift enthalten sind.

## (54) Aromatische Polyester auf Basis von Phenoxyterephthalsäure, Verfahren zu ihrer Herstellung und ihre Verwendung.

(30) Priorität: **31.03.87 DE 3710643**

(43) Veröffentlichungstag der Anmeldung:
**05.10.88 Patentblatt 88/40**

(45) Bekanntmachung des Hinweises auf die Patenterteilung:
**23.10.91 Patentblatt 91/43**

(84) Benannte Vertragsstaaten:
**BE CH DE FR GB IT LI NL**

(56) Entgegenhaltungen:
**US-A- 3 723 388**

**PATENT ABSTRACTS OF JAPAN, Band 9, Nr. 200 (C-298)[1923], 16. August 1985; & JP-A-60 69 132 (TEIJIN K.K.) 19-04-1985**

**PATENT ABSTRACTS OF JAPAN, Band 10, Nr. 63 (C-332)[2120], 13. März 1986; & JP-A-60 203 631 (ASAHI KASEI KOGYO K.K.) 15-10-1985**

(73) Patentinhaber: **HÜLS AKTIENGESELLSCHAFT**
**Patentabteilung / PB 15 - Postfach 13 20**
**W-4370 Marl 1(DE)**

(72) Erfinder: **Poll, Heinz-Günter, Dr.**
**Tucherweg 80**
**W-4010 Hilden(DE)**
Erfinder: **Bartmann, Martin, Dr.**
**Burgstrasse 35**
**W-4350 Recklinghausen(DE)**

EP 0 284 726 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermotrope, aromatische Polyester auf Basis von Phenoxyterephthalsäure, einer weiteren aromatischen Dicarbonsäure, mindestens einer aromatischen Hydroxycarbonsäure und mindestens einem Bisphenol.

Aromatische Polyester sind seit langem bekannt und werden als hochtemperaturstabile Werkstoffe geschätzt. Die Herstellung und Verwendung solcher Materialien wird z. B. in folgenden Literaturstellen beschrieben: W M. Eareckson, J. Pol. Sci. XL, 399 (1959); G. Bier, Polymer 15, 527 (1974); A. Ciferri, W.R. Krigbaum, R.B. Meyer, "Polymer Liquid Crystalls", Academic Press, New York, 1982; A.B. Erdemir, D.J. Johnson and J.G. Tomka, Polymer 27, 441 (1986).

Die DE-OS 20 25 971 beschreibt hochmolekulare, thermotrope Polyester auf Basis von aromatischen Dicarbonsäuren wie z. B. Tere- und Isophthalsäure, Bisphenolen wie z. B. Hydrochinon und 4,4'-Dihydroxybiphenyl und p-Hydroxybenzoesäure. Diese Polyester sind durchweg schlecht verarbeitbar.

Copolyester, die zu mindestens 80 Mol.-% aus Isophthalsäure- und Hydrochinoneinheiten aufgebaut sind, werden in der EP-OS 0 045 499 beschrieben. Diese Polyester sind in der Schmelze formbar.

Eine Reihe von aromatischen Polyestern besitzen zwar hervorragende thermische Beständigkeiten; die bei der Verformung auftretenden Temperaturen sind jedoch so hoch, daß das Polymerisat verfärbt und teilweise abgebaut wird. Probleme treten auch beim Verformen der Polyester unter hohen Scherkräften auf. Die prozentuale Schrumpfung in Maschinenrichtung und in Querrichtung hierzu ist nämlich recht unterschiedlich. Eine Lösung dieser Probleme wird erzielt, wenn man aromatische Dicarbonsäuren und Bisphenole in Gegenwart einer trifunktionellen Verbindung wie z. B. einer aromatischen Dihydroxymonocarbonsäure polykondensiert.

Die US-PS 3 723 388 beschreibt Polyester auf Basis von Bisphenolen und einer Mischung aus mindestens 10 Mol.-% einer substituierten Phenoxyphthalsäure und 0 bis 90 Mol.-% einer weiteren aromatischen Dicarbonsäure oder eines Derivates hiervon. Dieser Schrift liegt die Erkenntnis zugrunde, daß sich Polyester auf Basis von Phenoxyphthalsäuren bei deutlich niedrigeren Temperaturen verarbeiten lassen als die entsprechenden Ester der unsubstituierten Phthalsäuren. Die Schrift verweist beispielsweise auf die nicht-kristallinen Eigenschaften eines Polyesters auf Basis von Phenoxyterephthalsäure und Hydrochinon (siehe Example 5), enthält jedoch keinen Hinweis auf etwaige flüssigkristalline Eigenschaften.

Die japanische Offenlegungsschrift 60/69 132 beschreibt lineare aromatische Polyester aus Phenoxyterephthalsäure und Bisphenolen mit einer inhärenten Viskosität von mindestens 1,0. Gegebenenfalls kann in diesen Polyestern die Phenoxyterephthalsäure bis zu 20 Mol-%, vorzugsweise nur bis zu 10 Mol.-%, durch andere aromatische Dicarbonsäuren ersetzt werden. Wichtig ist jedoch, daß die Carboxylgruppen dieser Dicarbonsäuren parallel entgegengesetzt zueinander stehen, wie dies z. B. in der Terephthalsäure der Fall ist. Auch die Hydroxylgruppen der Bisphenole sollen entgegengesetzt zueinander stehen. Es wird zwar von der Möglichkeit gesprochen, auch Hydroxycarbonsäuren mit einzukondensieren; aber dies ist nicht experimentell belegt.

Die Herstellung dieser Polyester erfolgt in Gegenwart nicht reaktiver, hochsiedender Verbindungen mit einem Molekulargewicht unter 1 000. Diese sind schon deshalb erforderlich, da nur so der Polymerisationsgrad der Polyester erreicht werden kann und sich sonst die Polyester oberhalb der Schmelztemperatur zersetzen würden. Nach der Polykondensation und Formgebung muß das niedrigmolekulare Zusatzmittel aus dem fertigen Formteil wieder extrahiert werden. Dieser Verfahrensschritt, der bis zu einer Stunde dauern kann, ist technisch überaus nachteilig.

Im Vergleichsbeispiel 1 dieser japanischen Schrift wird die Herstellung eines Polyesters durch Umsetzung von Phenoxyterephthalsäurediphenylester und Hydrochinon beschrieben. Der Polyester hat einen Schmelzpunkt von 320 °C, ist aber erst bei 405 °C fließfähig und zersetzt sich. Es wird ausdrücklich darauf hingewiesen, daß dieser Polyester bei Temperaturen unter 400 °C nicht verarbeitet werden kann.

Aus dem Stand der Technik waren also sowohl aromatische Polyester auf Basis von Terephthalsäure, Hydrochinon und p-Hydroxybenzoesäure als auch auf Basis von Phenoxyterephthalsäure und Bisphenolen bekannt; flüssigkristalline Polyester auf Basis von Phenoxyterephthalsäure, mindestens einer weiteren Dicarbonsäure, Bisphenolen und aromatischen Hydroxycarbonsäuren waren jedoch bisher nicht bekannt.

Es wurden jetzt überraschend teilkristalline, aromatische Polyester mit einem Schmelzpunkt unter 360 °C gefunden, die eine anisotrope Schmelzphase ausbilden und unter 360 °C verarbeitbar sind.

Diese werden erhalten durch Umsetzung von

A einer Mischung aus

- 10 bis 80 Mol-% einer Phenoxyterephthalsäure und
- 90 bis 20 Mol-% mindestens einer weiteren aromatischen Dicarbonsäure,

B mindestens einer Verbindung mit 2 an einen

aromatischen Ring gebundenen OH-Gruppen und
C mindestens einer aromatischen Hydroxycarbonsäure.

Die Phenoxyterephthalsäure weist die allgemeine Formel

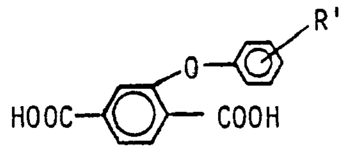

auf, wobei R' für Wasserstoff, Halogen oder einen Alkyl-, Aryl-, Alkyloxy- oder Aryloxyrest mit jeweils bis zu 12 C-Atomen steht.

Bevorzugte Polyester sind solche, die - bezogen auf 1 Mol der Mischung A - 0,1 bis 5 Mol, vorzugsweise 0,5 bis 3 Mol, der aromatischen Hydroxycarbonsäure enthalten. Das Molverhältnis A : B hat einen Wert von insbesondere 0,9 bis 1,1, vorzugsweise 0,95 bis 1,05.

Gegenstand der Erfindung sind ferner Verfahren zur Herstellung dieser Polyester gemäß den Ansprüchen 5 bis 7 sowie die Verwendung zur Herstellung von Formteilen gemäß Anspruch 8.

Mit der Erfindung werden folgende Vorteile erzielt:

1. Im Gegensatz zu den Ausführungen in der JP-OS 60/69 132 erhält man auch in Abwesenheit der niedermolekularen Verbindungen hochmolekulare Produkte. Diese sind schmelzbar, ohne daß sie sich zersetzen.

2. Die Polyester sind problemlos thermoplastisch verarbeitbar.

Die Komponente A ist eine Mischung aus 10 bis 80 Mol.-% Phenoxyterephthalsäure und 90 bis 20 Mol.-% mindestens einer weiteren aromatischen Dicarbonsäure.

Die Phenoxyterephthalsäure (R' = H) ist gemäß J. Polym. Sci. Polym. Chem. Ed. 18, 3069 (1986) leicht herstellbar und wird bevorzugt eingesetzt. Die substituierten Phenoxyterephthalsäuren sind beispielsweise durch Umsetzung von Nitrophthalsäure mit den entsprechend substituierten Phenolen leicht herzustellen.

Als weitere aromatische Dicarbonsäuren kommen beispielsweise in Frage

- Tere- und/oder Isophthalsäure
- Naphthalindicarbonsäuren, wie z. B. 1,4-, 1,5-, 2,6- und 2,7-Naphthalindicarbonsäure
- aromatische Dicarbonsäuren der allgemeinen Formel

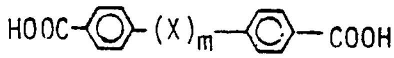

mit X = -O-, -S-, $-SO_2-$, -CO-, $-CH_2-$, $-C(CH_3)_2-$ und m = 0 und 1. Bevorzugt werden die Säuren mit den Werten m = 0 sowie m = 1 und X = -CO-.

Die Komponente B enthält zwei an einen aromatischen Ring gebundene OH-Gruppen. Geeignet sind insbesondere folgende Bisphenole

- Hydrochinone und Resorcine der allgemeinen Formel

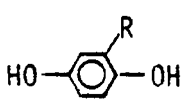

bzw.

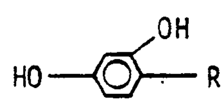

mit R = H, Br, Cl, Aryl, Alkyl, Aralkyl, Aryloxy, Alkyloxy, Acyl
Der Rest R weist maximal 12 C-Atome auf.

- Dihydroxynaphthaline wie z. B. 1,4-, 1,5-, 2,6- und 2,7-Dihydroxynaphthalin
- Bisphenole der allgemeinen Formel

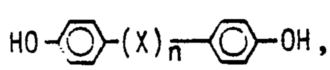

wobei X die oben aufgeführte Bedeutung und n den Wert 0 oder 1 hat.

Bevorzugt werden Hydrochinon und 4,4-Dihydroxybiphenyl.

Die Komponente C ist eine aromatische Hydroxycarbonsäure. Sie weist üblicherweise die Struktur

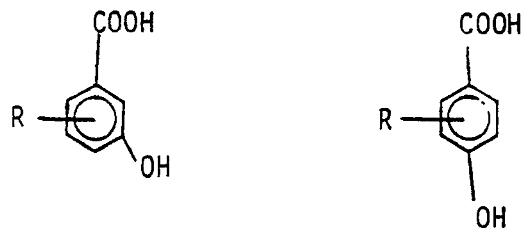

auf. R hat eine der bereits oben angegebenen Bedeutungen. Geeignet sind schließlich auch Hydroxynaphthoesäuren, die durch den soeben beschriebenen Rest R substituiert sein können. Bevorzugt wird 4-Hydroxybenzoesäure. Bezogen auf 1 Mol der Mischung gemäß A werden 0,1 bis 5 Mole, vorzugsweise 0,5 bis 3 Mole, der Komponente C eingesetzt. Die Herstellung der Polyester kann nach folgenden Methoden erfolgen:

1. Umsetzung der Phenylester der Komponenten A und C mit den Verbindungen gemäß B (vgl. G. Bier, Polymer 15, 527 (1974).

2. Umsetzung der Säurechloride der Mischung A und der Säurechloride von C mit den Verbindungen gemäß B. Die Reaktion wird üblicherweise in Methylenchlorid oder analogen Lösemitteln durchgeführt (vgl. G. Bier, Polymer 15, 527 (1974).

3. Umsetzung der Säuremischung gemäß A mit den acylierten Bisphenolen B und den acylierten Hydroxycarbonsäuren gemäß C.

Als Acylierungsmitttel verwendet man Buttersäureanhydrid, Propionsäureanhydrid oder vorzugsweise Essigsäureanhydrid. Die Acylierung kann entweder vor der Polykondensation in einem separaten Reaktor durchgeführt werden; man kann aber auch das Gemisch der Komponenten A, B und C in Gegenwart des Acylierungsmittels erhitzen und in situ die acylierten Verbindungen herstellen. In diesem Fall sollte das Acetanhydrid - bezogen auf die Anzahl der vorhandenen phenolischen OH-Gruppen - mindestens in einer äquivalenten Menge eingesetzt werden. Die Temperatur während der Reaktion liegt üblicherweise zwischen 140 und 350 °C, vorzugsweise zwischen 250 und 320 °C. Der Druck ist nicht kritisch.

Die Polykondensation wird bevorzugt in der Schmelze durchgeführt.

Die Polykondensation kann in Gegenwart von Katalysatoren durchgeführt werden. Geeignete Katalysatoren sind bekanntlich Alkali- oder Erdalkaliacetate, Zinkacetat, Germaniumdioxid, Antimontrioxid, Organozinnverbindungen sowie Titan- und Zirkonalkoholate. Die Katalysatorkonzentration beträgt 0,001 bis 0,5 Gew.-%, bevorzugt 0,01 bis 0,1 Gew.-%. Das Molekulargewicht der erhaltenen Polyester kann durch eine Festphasennachkondensation erhöht werden.

Die erfindungsgemäßen Polyester können auf Standardmaschinen durch Spritzguß oder Extrusion zu Formkörpern, Fasern oder Folien verarbeitet werden. Sie können die üblichen Hilfsstoffe, Stabilisatoren und Füllstoffe wie Glas- oder Kohlefasern, Mineralstoffe, UV-Stabilisatoren und/oder Antioxidantien enthalten.

Die reduzierte Viskosität $\eta_{red} = (\eta_{rel} - 1)/c$ wurde in einem Lösungsmittelgemisch aus je 50 Gewichtsprozent Phenol und o-Dichlorbenzol bei 23 °C bestimmt, wobei die Konzentration des Polyesters 5 g/l betrug.

Die Glastemperatur (Tg) und der Schmelzpunkt (Tm) wurden nach dem Verfahren der "Differential Scanning Calorimetry" (DSC) an einem DSC-Gerät (Typ Mettler FP 800) bestimmt.

Die Untersuchung des flüssigkristallinen Verhaltens wurde an einem Leitz-Orthoplan-Polarisationsmikroskop mit 13facher Objektvergrößerung in Verbindung mit einem Heiztisch Mettler FP 52, der für einen Betrieb bis 380 °C umgerüstet war, durchgeführt.

Beispiel 1

7,7 g (0,03 Mol) Phenoxyterephthalsäure, 3,3 g (0,02 Mol) Isophthalsäure, 5,5 g (0,05 Mol) Hydrochinon, 6,9 g (0,05 Mol) 4-Hydroxybenzoesäure und 25,5 g (0,25 Mol) Essigsäureanhydrid wurden vermischt und unter Schutzgas auf 260 °C erhitzt. Nach 30 Minuten bei 260 °C wurde der Ansatz je 15 Minuten bei 280, 300 und 320 °C gehalten, wobei Essigsäure und überschüssiges Acetanhydrid abdestillierten. Zur Vervollständigung der Reaktion wurde bei 320 °C für 1 Stunde ein Vakuum von 0,1 mbar angelegt. Der erhaltene Polyester hatte eine reduzierte Viskosität $\eta_{red}$ von 1,05. Die Glastemperatur betrug 123 °C, der Schmelzpunkt 348 °C. Oberhalb des Schmelzpunktes zeigte der Polyester im Polarisationsmikroskop bei gekreuzten Polarisatoren eine Schlierentextur, wie sie für flüssigkristalline Verbindungen typisch ist. Die Schmelze des Polyesters war bis 380 °C anisotrop.

Beispiele 2 bis 8

Die Beispiele 2 bis 8 wurden analog zu Beispiel 1 durchgeführt. Die Zusammensetzungen der Polyester sowie deren Eigenschaften sind in Tabelle 1 zusammengefaßt.

Tabelle 1

| Beispiel | Phenoxyterephthalsäure (Mol) | Isophthalsäure (Mol) | Terephthalsäure (Mol) | Bisphenol (Mol) Hy[1] | Bisphenol (Mol) DHB[2] | 4-Hydroxybenzoessäure (Mol) | Acetanhydrid (Mol) | $\eta_{red}$ (dl/g) | Tg (°C) | Tm (°C) |
|---|---|---|---|---|---|---|---|---|---|---|
| 1 | 0,03 | 0,02 | - | 0,05 | - | 0,05 | 0,25 | 1,05 | 123 | 348 |
| 2 | 0,03 | 0,02 | - | 0,05 | - | 0,15 | 0,35 | -[3] | 121 | 352 |
| 3 | 0,03 | 0,02 | - | - | 0,05 | 0,15 | 0,35 | 1,49 | 132 | 338 |
| 4 | 0,01 | 0,04 | - | 0,05 | - | 0,10 | 0,30 | 1,52 | 129 | 272 |
| 5 | 0,01 | 0,04 | - | 0,05 | - | 0,15 | 0,35 | -[3] | 124 | 352 |
| 6 | 0,01 | 0,03 | 0,01 | 0,025 | 0,025 | 0,10 | 0,30 | 1,66 | 125 | 258 |
| 7 | 0,01 | 0,03 | 0,01 | 0,025 | 0,025 | 0,15 | 0,35 | -[3] | 139 | 310 |
| 8 | 0,01 | 0,04 | - | 0,025 | 0,025 | 0,10 | 0,30 | 1,70 | 130 | 311 |

1) Hy: Hydrochinon

20 DHB: 4,4'Dihydroxybiphenyl

3) -: unlöslich in Phenol/o-Dichlorbenzol

## Patentansprüche

1. Teilkristalline aromatische Polyester mit einem Schmelzpunkt unter 360 °C, die eine anisotrope Schmelzphase ausbilden und unter 360 °C verarbeitbar sind, auf Basis von

A einer Mischung von
- 10 bis 80 Mol-% einer Phenoxyterephthalsäure der allgemeinen Formel

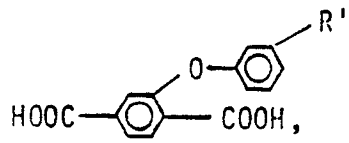

wobei R' für Wasserstoff, Halogen oder einen Alkyl-, Aryl-, Alkyloxy- oder Aryloxyrest mit jeweils bis zu 12 C-Atomen steht,
und
- 90 bis 20 Mol-% mindestens einer weiteren aromatischen Dicarbonsäure

B mindestens einer Verbindung mit 2 an einen aromatischen Ring gebundenen OH-Gruppen und
C mindestens einer aromatischen Hydroxycarbonsäure.

**2.** Teilkristalline Polyester gemäß Anspruch 1, dadurch gekennzeichnet, daß das Molverhältnis A : B den Wert X mit 0,9 < X < 1,1, vorzugsweise mit 0,95 < X < 1,05, hat.

**3.** Teilkristalline Polyester gemäß Anspruch 2, dadurch gekennzeichnet, daß sie, bezogen auf 1 Mol der Mischung A, 0,1 bis 5 Mole, vorzugsweise 0,5 bis 3 Mole, der aromatischen Hydroxycarbonsäure enthalten.

**4.** Teilkristalline Polyester gemäß den Ansprüchen 1 bis 3 dadurch gekennzeichnet, daß die Mischung A 20 bis 80 Mol-% Isophthalsäure enthält.

**5.** Verfahren zur Herstellung der Polyester gemäß den Ansprüchen 1 bis 4, dadurch gekennzeichnet, daß man
A eine Mischung aus
- 10 bis 80 Mol-% einer Phenoxyterephthalsäure und
- 90 bis 20 Mol-% mindestens einer weiteren aromatischen Dicarbonsäure,

B mindestens eine Verbindung mit 2 an einen aromatischen Ring gebundenen OH-Gruppen und
C mindestens eine aromatische Hydroxycarbonsäure

zur Umsetzung bringt.

**6.** Verfahren nach Anspruch 5, dadurch gekennzeichnet, daß man die Umsetzung der Komponenten A, B und C in der Schmelze bei einer Temperatur von 140 bis 350 °C, vorzugsweise 250 bis 320 °C, durchführt.

**7.** Verfahren zur Herstellung der Polyester gemäß den Ansprüchen 1 bis 4, dadurch gekennzeichnet, daß man die Polykondensation der Komponenten A, B und C in Gegenwart von mindestens solchen Mengen Acetanhydrid durchführt, daß auf eine phenolische OH-Gruppe eine Acetanhydridgruppe kommt.

**8.** Verwendung der Polyester gemäß den Ansprüchen 1 bis 4 zur Herstellung von Formteilen.

## Claims

**1.** A partially crystalline aromatic polyester which has a melting point of below 360 °C, forms an anisotropic melt phase, can be processed at below 360 °C and is based on

A a mixture of
- from 10 to 80 mol-% of a phenoxyterephthalic acid of the general formula

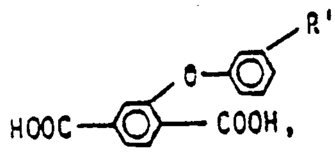

where R' represents hydrogen, halogen or an alkyl, aryl, alkoxy or aryloxy radical, in each case having up to 12 carbon atoms, and
- 90 to 20 mol-% of at least one further aromatic dicarboxylic acid,

B at least one compound containing 2 OH groups bonded to an aromatic ring and
C at least one aromatic hydroxycarboxylic acid.

2. A partially crystalline polyester according to claim 1, characterised in that the A : B molar ratio has a value X where $0.9 < X < 1.1$, preferably where $0.95 < X < 1.05$.

3. A partially crystalline polyester according to claim 2, characterised in that it contains from 0.1 to 5 mol, Preferably from 0.5 to 3 mol, based on 1 mol of the mixture A, of the aromatic hydroxycarboxylic acid.

4. A partially crystalline polyester according to any of claims 1 to 3, characterised in that the mixture A contains from 20 to 80 mol-% of isophthalic acid.

5. The process for the preparation of a polyester according to any of claims 1 to 4, characterised in that
A a mixture of
- from 10 to 80 mol-% of a phenoxyterephthalic acid and
- from 90 to 20 mol-% of at least one further aromatic dicarboxylic acid,

B at least one compound containing 2 OH groups bonded to an aromatic ring and
C at least one aromatic hydroxycarboxylic acid are reacted.

6. A process according to claim 5, characterised in that the reaction of the components A, B and C is carried out in the melt at a temperature of from 140 to 350 °C, preferably from 250 to 320 °C.

7. A process for the preparation of a polyester according to any of claims 1 to 4, characterised in that the polycondensation of components A, B and C is carried out in the presence of an amount of acetic anhydride which is at least sufficient to provide one acetic anhydride group per phenolic OH group.

8. The use of a polyester according to any of claims 1 to 4 for the production of mouldings.

**Revendications**

1. Polyesters aromatiques partiellement cristallins, d'un point de fusion inférieur à 360 °C, qui forment une phase de fusion anisotrope et sont façonnables au-dessous de 360 °C, à base :

A. D'un mélange constitué
par 10 à 80 mol-% d'un acide phénoxy-téréphtalique de la formule générale

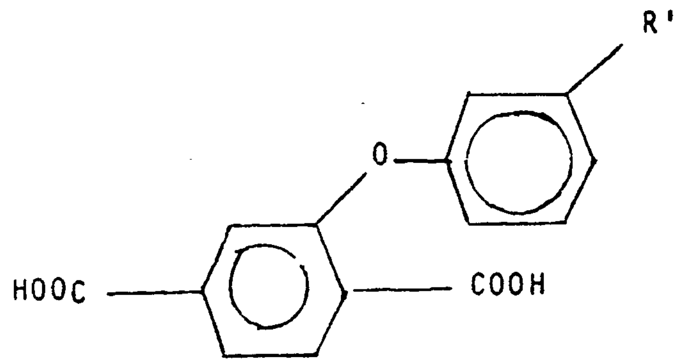

dans laquelle R' représente de l'hydrogène, un halogène ou un radical alkyle, aryle, alkyloxy ou aryloxy comportant chacun jusqu'à 12 atomes de carbone,
et
par 90 à 20 mol-% au moins d'un autre acide dicarboxylique aromatique,
B. d'au moins un composé comportant deux groupes hydroxyle liés à un anneau aromatique,
et
C. d'au moins un acide hydroxy-carboxylique aromatique.

**2.** Polyesters partiellement cristallins selon la revendication 1,
caractérisés par le fait que le rapport molaire A : B a la valeur $\underline{X}$, avec la relation $0,9 < \underline{X} < 1,1$, de préférence avec la relation $0,95 < \underline{X} < 1,05$.

**3.** Polyesters partiellement cristallins selon la revendication 2,
oaractérisés par le fait qu'ils renferment, relativement à une mole du mélange A, de 0,1 à 5 moles, de préférence de 0,5 à 3 moles de l'acide hydroxy-carboxylique aromatique.

**4.** Polyesters partiellement cristallins selon les revendications 1 à 3,
caractérisés par le fait que le mélange A renferme de 20 à 80 mol-% d'acide isophtalique.

**5.** Procédé de préparation des polyesters selon les revendications 1 à 4,
caractérisé par le fait que l'on fait réagir :

A. un mélange constitué
- par 10 à 80 mol-% d'un acide phénoxy-téréphtalique
  et
- par 90 à 20 mol-% au moins d'un autre acide dicarboxylique aromatique,

B. au moins un composé comportant deux groupes hydroxyle liés à un anneau aromatique,
et
C. au moins un acide hydroxy-carboxylique aromatique.

**6.** Procédé selon la revendication 5,
caractérisé par le fait que l'on effectue la réaction des composants A, B et C à l'état fondu, à une température de 140 à 350 °C, de préférence de 250 à 320 °C.

**7.** Procédé de préparation des polyesters selon les revendications 1 à 4,
caractérisé par le fait que l'on effectue la polycondensation des composants A, B et C en présence de quantités d'anhydride d'acide acétique au moins telles qu'il y ait un groupe anhydride d'acide acétique par groupe hydroxyle phénolique.

**8.** L'utilisation des polyesters selon les revendications 1 à 4 pour la fabrication de pièces moulées.